(19) Europäisches Patentamt
European Patent Office
Office européen des brevets

(11) **EP 4 682 213 A1**

(12) **EUROPEAN PATENT APPLICATION**
published in accordance with Art. 153(4) EPC

(43) Date of publication:
**21.01.2026   Bulletin 2026/04**

(21) Application number: **24770714.4**

(22) Date of filing: **07.03.2024**

(51) International Patent Classification (IPC):
***C09D 11/16*** (2014.01)     ***C09D 11/18*** (2006.01)

(52) Cooperative Patent Classification (CPC):
**C09D 11/16; C09D 11/18**

(86) International application number:
**PCT/JP2024/008790**

(87) International publication number:
**WO 2024/190608 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **15.03.2023   JP 2023041186**

(71) Applicant: **MITSUBISHI PENCIL COMPANY,
LIMITED
Tokyo 140-8537 (JP)**

(72) Inventor: **OGURA, Kosuke
Tokyo 140-8537 (JP)**

(74) Representative: **Vossius & Partner
Patentanwälte Rechtsanwälte mbB
Siebertstrasse 3
81675 München (DE)**

(54)   **OIL-IN-WATER INK COMPOSITION FOR WRITING UTENSILS**

(57)     An oil-in-water type ink composition for writing utensils according to the present invention has an aqueous phase and an oil phase dispersed in the aqueous phase in an oil-in-water type emulsion state. At least one among the oil phase and the aqueous phase contains a colorant, and the oil phase contains a sulfide or a sulfurized fat/oil.

Fig. 1

EP 4 682 213 A1

**Description**

FIELD

The present invention relates to an oil-in-water type ink composition for writing instruments (writing utensils).

BACKGROUND

Water-based ballpoint pens, as a characteristic thereof, have a light writing feel, but often feel scratchy. Water-soluble dyes used as coloring agents have the advantage of high coloring strength and high degree of freedom in color adjustment, but have low weather resistance, and when water adheres to drawn lines, there is a problem in that the lines easily bleed.

Oil-based ballpoint pens have the advantages of not producing a scratchy sensation during writing and exhibiting minimal bleeding in drawn lines, but often have a heavy writing quality. The oil-soluble dyes used as coloring agents are water-resistant, and thus bleeding when water adheres to drawn lines, as described above, does not occur.

In recent years, oil-based ballpoint pens in which the viscosity of the oil-based ink is reduced to improve writing quality have been developed. However, low-viscosity oil-based inks have a higher writing flow rate and thus line drying properties deteriorate, causing bleed-through of ink to back sides of paper and blotting.

In response to such challenges, as a means to achieve both the good writing quality of an aqueous phase and the water resistance of an oil-soluble dye, ink compositions for oil-in-water type ballpoint pens in which the ink properties are those of an oil-in-water type emulsion (O/W emulsion) have been disclosed. Such ink compositions for oil-in-water type ballpoint pens combine the advantages of water-based inks and oil-based inks. However, there were challenges such as insufficient storage stability, tendency for precipitated aggregates to be generated at the pen tip portion, and writing defects occurring before the ink is expended. In order to address these challenges, various proposals have been made.

PTL 1 discloses an ink composition for water-based ballpoint pens, wherein an oil phase is contained in an aqueous phase in an oil-in-water type emulsion state. At least one of the oil phase and the aqueous phase comprises a coloring agent. The oil phase is characterized as comprising an estolide, which is a fatty acid oligomer formed by condensation of fatty acids each having a hydroxyl group or condensation of a fatty acid having a hydroxyl group and a fatty acid having no hydroxyl group, or an ester of the estolide and an alcohol, among the components constituting the oil phase. PTL 1 describes that according to the above configuration, satisfactory storage stability over a prolonged period can be provided.

PTL 2 discloses an ink composition for water-based ballpoint pen, wherein an oil phase is contained in an aqueous phase in an oil-in-water type emulsion state. The oil phase or the oil and aqueous phases each comprise a coloring agent. The oil phase, in the component constituting the oil phase, is characterized as comprising 50% by mass or greater of an aromatic organic solvent and 5% by greater and less than 50% by mass of a fatty acid having 6 to 22 carbon atoms. PTL 2 describes that according to the above configuration, satisfactory writing stability can be provided.

[CITATION LIST]

[PATENT LITERATURE]

[PTL 1] Japanese Unexamined Patent Publication (Kokai) No. 2013-221051
[PTL 2] Japanese Unexamined Patent Publication (Kokai) No. 2013-203790

SUMMARY

[TECHNICAL PROBLEM]

The oil-in-water type ink of PTL 1 combines the advantages of water-based inks and oil-based inks, and storage stability over a prolonged period is satisfactory. However, there is room for improvement in terms of stability when stored in low-temperature and high-temperature environments.

The oil-in-water type ink of PTL 2 combines the advantages of water-based inks and oil-based inks, and satisfactory writing stability is obtained. However, blurring during writing easily occurs after storage for a prolonged period in a low-temperature environment.

In the present invention, an oil-in-water type ink composition for writing utensils having satisfactory smoothness in a high-temperature environment, low-temperature stability of ink, and writing flow rate stability is provided.

[SOLUTION TO PROBLEM]

The present inventors, as a result of intensive studies, have discovered that the above object can be achieved by the following means, and have completed the present invention. Specifically, the present invention is as follows:

<Aspect 1> An oil-in-water type ink composition for writing instruments, comprising an aqueous phase and an oil phase dispersed in the aqueous phase, in an oil-in-water type emulsion state,

wherein at least one of the oil phase and the aqueous phase comprises a coloring material, and
wherein the oil phase contains a sulfide or a sulfurized oil/fat.

<Aspect 2> The oil-in-water type ink composition for writing instruments according to Aspect 1, wherein the sulfide has a general formula below:

$$R^1\text{-}S_x\text{-}R^2$$

wherein $R^1$ and $R^2$ each represent an alkyl group or alkenyl group having 2 to 24 carbon atoms; and x represents an integer of 1 to 8.

<Aspect 3> The oil-in-water type ink composition for writing instruments according to Aspect 1 or 2, wherein content ratio of the sulfide or sulfurized oil/fat in the oil phase, relative to mass of the oil phase, is 40% by mass or less.

<Aspect 4> The oil-in-water type ink composition for writing instruments according to any one of Aspects 1 to 3, wherein content ratio of the sulfide or sulfurized oil/fat, relative to the oil-in-water type ink composition for writing instruments, is 5% by mass or less.

<Aspect 5> The oil-in-water type ink composition for writing instruments according to any one of Aspects 1 to 4, wherein content ratio of the oil phase, relative to the oil-in-water type ink composition for writing instruments, is 1% by mass or greater and 30% by mass or less.

<Aspect 6> A writing instrument, comprising an ink reservoir having the oil-in-water type ink composition for writing instruments according to any one of Aspects 1 to 5.

<Aspect 7> The writing instrument according to Aspect 6, which is a ballpoint pen.

<Aspect 8> The writing instrument according to Aspect 7, wherein width of an ink flow path of the ballpoint pen in a direction perpendicular to an axial direction, represented by a formula below:

$$(A - B)/2$$

wherein A and B represent diameters of a ball housing and a ball of the ballpoint pen, respectively, in a direction passing through center of the ball of the ballpoint pen and perpendicular to the axial direction, is 5 $\mu$m or more and 30 $\mu$m or less.

[ADVANTAGEOUS EFFECTS OF INVENTION]

According to the present invention, an oil-in-water type ink composition for writing instruments having satisfactory smoothness in a high-temperature environment, low-temperature stability of ink, and writing flow rate stability can be provided.

BRIEF DESCRIPTION OF DRAWINGS

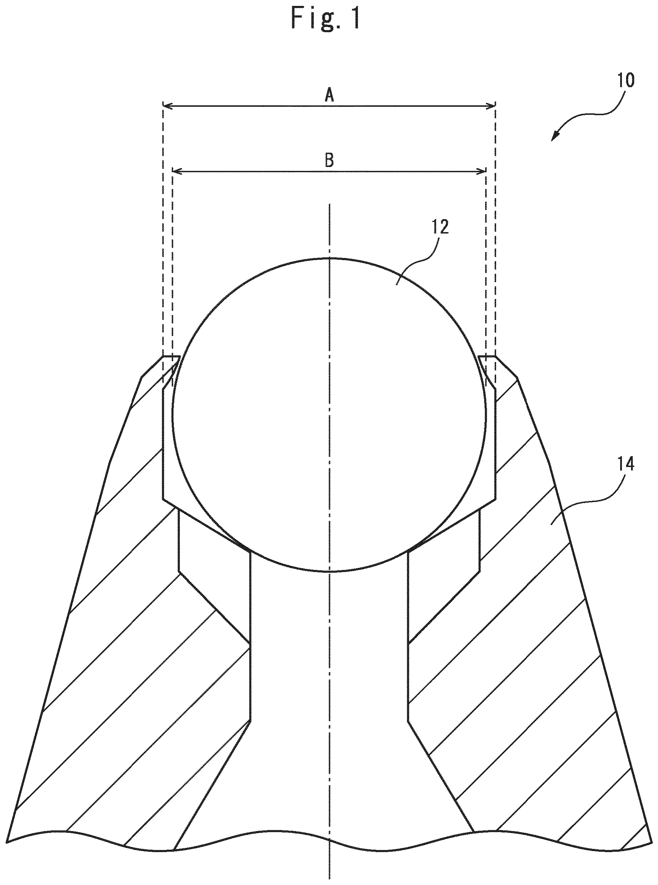

FIG. 1 is a sideways cross-sectional view of the writing portion of a writing instrument (ballpoint pen) of the present invention.

DESCRIPTION OF EMBODIMENTS

<<Oil-in-water type ink composition for writing instruments>>

The oil-in-water type ink composition for writing instruments of the present invention

comprises an aqueous phase and an oil phase dispersed in the aqueous phase, in an oil-in-water type emulsion state, wherein at least one of the oil phase and the aqueous phase comprises a coloring material, and

wherein the oil phase contains a sulfide or a sulfurized oil/fat.

When a conventional oil-in-water type ink composition for writing instruments is used in a ballpoint pen, the stability of ink flow rate during writing (writing flow rate stability) is sometimes insufficient. The present inventors found that the cause thereof was insufficient lubrication between the ball housing and the ball of the ballpoint pen. In such a case, generally, in the case of an oil-in-water type ink composition, adding a lubricant to the aqueous phase, which is the main phase, is considered.

The present inventors have discovered that by containing a sulfide or a sulfurized oil/fat in the oil phase, the writing flow rate stability can be satisfactorily obtained. In addition, the present inventors have discovered that by containing a sulfide or a sulfurized oil/fat in the oil phase, satisfactory writability in a high-temperature environment and low-temperature stability can be obtained.

Without being bound by theory, the reason therefor is considered that a portion of oil droplets is disrupted within the ball housing of the ballpoint pen, and the sulfide or sulfurized oil/fat within the oil phase strongly adheres to the ball housing, whereby a lubricating effect is obtained.

Hereinafter, each component of the present invention will be described.

<Oil phase>

The oil phase is dispersed in an aqueous phase and contains a sulfide or a sulfurized oil/fat. The oil phase may contain a coloring material.

The oil phase may contain an oil phase component. Examples of the oil phase component include an estolide, which is a fatty acid oligomer formed by condensation of fatty acids each having a hydroxyl group or condensation of a fatty acid having a hydroxyl group with a fatty acid having no hydroxyl group, or an ester of the estolide and an alcohol. The oil phase may contain the fatty acid itself having no hydroxyl group used to form the estolide or ester.

The oil phase may further contain a resin and/or an organic solvent to adjust viscosity. As the resin and organic solvent, those mentioned in relation to the aqueous phase can be used.

(Sulfide or sulfurized oil/fat)

A sulfide is generally a saturated or unsaturated hydrocarbon having in the backbone one or a plurality of sulfur atoms, and may be a monosulfide or a polysulfide. Among such sulfides, those comprising an alkenyl group are commercially referred to as "sulfurized olefins". Particularly, the sulfide of the present invention may have the following general formula.

$$R^1\text{-}S_x\text{-}R^2$$

wherein $R^1$ and $R^2$ each represent an alkyl group or alkenyl group having 2 to 24 carbon atoms; and x represents an integer of 1 to 8.

As the sulfide having such a structure, for example, a primary polysulfide, a secondary polysulfide, or a tertiary polysulfide can be used.

As the primary polysulfide, diethyl polysulfide, di-n-butyl polysulfide, di-n-hexyl polysulfide, di-n-octyl polysulfide, di-n-nonyl polysulfide, di-n-dodecyl polysulfide, or di-n-octadecyl polysulfide can be used.

As the secondary polysulfide, bishexan-2-yl polysulfide, bisoctan-2-yl polysulfide, bisdecen-2-yl polysulfide, or bisdodecen-2-yl polysulfide can be used.

As the tertiary polysulfide, bis-2-methylethan-2-yl polysulfide, bis-2-methylpentan-2-yl polysulfide, bis-2-methylhexan-2-yl polysulfide, bis-2-methylheptan-2-yl polysulfide, bis-2-methylnonan-2-yl polysulfide, bis-2-methylundecen-2-yl polysulfide, or bis-2,4,4-trimethylpentan-2-yl polysulfide can be used.

A sulfurized oil/fat is generally formed by adding a sulfur atom to a double bond portion of an oil/fat. Particularly, the sulfurized oil/fat of the present invention may have, in at least one portion thereof, a structure of the general formula indicated above in relation to the sulfide.

As the sulfurized oil/fat, for example, a sulfurized product of an unsaturated animal or vegetable oil/fat such as pork fat (lard), beef tallow, fish oil, rapeseed oil, palm kernel oil, canola oil, coconut oil, corn oil, cottonseed oil, olive oil, palm oil, peanut oil, sunflower oil, soybean oil, safflower oil, rice bran oil, palm oil, sesame oil, linseed oil, grapeseed oil, or a recovered vegetable oil can be used.

The content ratio of the sulfide or sulfurized oil/fat may be 0.3% by mass or greater, 0.5% by mass or greater, 0.7% by mass or greater, 1% by mass or greater, 3% by mass or greater, 5% by mass or greater, 7% by mass or greater, 10% by mass or greater, 15% by mass or greater, 17% by mass or greater, 20% by mass or greater, or 22% by mass or greater, and may be 50% by mass or less, 48% by mass or less, 45% by mass or less, 43% by mass or less, 40% by mass or less, 38% by mass or less, 35% by mass or less, 33% by mass or less, 30% by mass or less, or 28% by mass or less, relative to the mass of the oil phase.

The content ratio of the sulfide or sulfurized oil/fat may be greater than 0.00% by mass, greater than 0.01% by mass, greater than 0.02% by mass, greater than 0.03% by mass, greater than 0.04% by mass, 0.05% by mass or greater, 0.1% by mass or greater, 0.3% by mass or greater, 0.4% by mass or greater, 0.5% by mass or greater, 0.7% by mass or greater, 1.0% by mass or greater, 1.2% by mass or greater, 1.5% by mass or greater, 1.7% by mass or greater, 2.0% by mass or greater, or 2.2% by mass or greater, and may be 8.0% by mass or less, 7.5% by mass or less, 7.0% by mass or less, 6.5% by mass or less, 6.0% by mass or less, 5.5% by mass or less, 5.0% by mass or less, 4.7% by mass or less, 4.5% by mass or less, 4.2% by mass or less, 4.0% by mass or less, 3.7% by mass or less, 3.5% by mass or less, 3.3% by mass or less, 3.0% by mass or less, or 2.8% by mass or less, relative to the mass of the oil-in-water type ink composition for writing instruments.

(Estolide or ester)

The estolide or ester that can be used in the oil phase may be an estolide, which is a fatty acid oligomer formed by condensation of fatty acids each having a hydroxyl group or condensation of a fatty acid having a hydroxyl group with a fatty acid having no hydroxyl group, or an ester of the estolide and an alcohol.

As the fatty acid having a hydroxyl group in the above estolide or ester, various fatty acids used in the prior art can be used. Among these, castor oil fatty acid, in which the main component is ricinoleic acid, and hydrogenated castor oil fatty acid, in which the main component is 12-hydroxystearic acid, are preferably used. These fatty acids may be used independently, or may be mixed and used.

Fatty acids having no hydroxyl group include capric acid, lauric acid, myristic acid, palmitic acid, stearic acid, arachidic acid, behenic acid, lignoceric acid, cerotic acid, melissic acid, oleic acid, linoleic acid, and linolenic acid. Further, fatty acids comprising these components, such as coconut oil fatty acid, palm oil fatty acid, olive oil fatty acid, beef tallow fatty acid, and hydrogenated beef tallow fatty acid, can be used.

In the present invention, the fatty acid oligomer formed by condensation of fatty acids each having a hydroxyl group or the fatty acid oligomer (estolide) formed by condensation of a fatty acid having a hydroxyl group with a fatty acid having no hydroxyl group described above is used. The "fatty acid oligomer" refers to a condensate of two or more fatty acid units. A condensate of two to seven fatty acid units is preferable. It is acceptable that monomers be mixed in the fatty acid oligomer. However, from the viewpoint of solubility in the oil phase, it is preferable that the fatty acid oligomer have an average of 1.5 or more fatty acid units, and more preferably 2.0 or more fatty acid units.

The content ratio of the above estolide or ester may be 50% or greater, 60% or greater, or 70% or greater, and may be 90% or less or 85% or less, relative to the mass of the oil phase.

The oil phase may further contain an additional oil phase component. The additional oil phase component, for example, may further contain the fatty acid itself having no hydroxyl group used to form the above estolide or ester.

<Aqueous phase>

The aqueous phase contains at least water. In addition, the aqueous phase may further contain an emulsifier component. Due to the presence of the emulsifier component, the aqueous phase and the oil phase dispersed in the aqueous phase can exist in an oil-in-water type emulsion state.

The aqueous phase may further contain a coloring material, a resin, or an organic solvent.

(Water)

As water, distilled water or ion-exchanged water can be used.

The content ratio of water may be greater than 50% by mass, 55% by mass or greater, 60% by mass or greater, 65% by mass or greater, or 70% by mass or greater, and may be 90% by mass or less, 85% by mass or less, 80% by mass or less, or 75% by mass or less, relative to the mass of the oil-in-water type ink composition for writing instruments.

The content ratio of water may be greater than 50% by mass, 55% by mass or greater, 60% by mass or greater, 65% by mass or greater, 70% by mass or greater, 75% by mass or greater, or 80% by mass or greater, and may be 90% by mass or less or 85% by mass or less, relative to the mass of the aqueous phase.

(Emulsifier component)

As the emulsifier component, any emulsifier can be used. For example, an emulsifier comprising in the molecular backbone thereof one or a plurality of aromatic rings can be used.

The aromatic emulsifier that can be used in the ink composition of the present invention needs only to have one or more aromatic rings and is not particularly limited. For example, a polycyclic phenyl-type nonionic surfactant, such as polyoxyethylene distyrenated phenyl ether, polyoxyethylene monostyrenated phenyl ether, or polyoxyethylene cumylphenyl ether, or an ionic surfactant, such as a sulfate of the polycyclic phenyl-type nonionic surfactant, can be used.

The number of moles of ethylene oxide (EO) added to the above emulsifier is preferably 40 mol or more, 45 mol or more, or 50 mol or more, from the viewpoint that long ethylene oxide chains suppress coalescence of oil phase particles.

In addition to the above emulsifier, an emulsifier having a strong orientation toward the oil phase and a low number of moles of ethylene oxide added, specifically an emulsifier in which the number of moles of ethylene oxide added is 3 mol or more, 4 mol or more, or 5 mol or more and 15 mol or less, 12 mol or less, or 10 mol or less may be used. It may be preferable that an emulsifier having a strong orientation toward the oil phase and one having a strong orientation toward the aqueous phase be combined, from the viewpoints of increasing micelle concentration at the interface and improving stability of the emulsion.

Regarding the HLB value (hydrophile-lipophile balance value), at least one emulsifier having an HLB value of 15 or greater for a nonionic surfactant is preferably used, from the viewpoint of suppressing excessive incorporation of the emulsifier into the oil phase.

As the emulsifier component, in addition to a surfactant having an aromatic ring in the molecule, any emulsifier having another structure may be added and used. Examples of such an emulsifier include linear hydrocarbon-type nonionic surfactants, such as polyoxyethylene hydrogenated castor oil and polyoxyethylene alkyl (C10 to C18) esters, and sorbitan derivatives.

The content of the emulsifier component may be 5 parts by mass or more, 10 parts by mass or more, 15 parts by mass or more, 20 parts by mass or more, 25 parts by mass or more, 30 parts by mass or more, 35 parts by mass or more, 40 parts by mass or more, or 45 parts by mass or more, and may be 150 parts by mass or less, 140 parts by mass or less, 130 parts by mass or less, 120 parts by mass or less, 110 parts by mass or less, 100 parts by mass or less, 90 parts by mass or less, 80 parts by mass or less, 70 parts by mass or less, 65 parts by mass or less, 60 parts by mass or less, or 55 parts by mass or less, relative to 100 parts by mass of the oil phase.

(Resin)

As the resin, any resin can be used, particularly a resin used for fixing a coating film. For example, a sulfamide resin, a maleic acid resin, a terpene resin, a terpene-phenol resin, ester gum, a xylene resin, an alkyd resin, a phenolic resin, a rosin, polyvinylpyrrolidone, polyvinyl acetal, polyvinyl alcohol, an acrylic resin, a melamine-based resin, a nitrocellulose-based resin, a urea resin, or a derivative thereof can be used.

The content ratio of the resin can be adjusted according to the desired viscosity of the aqueous phase and, for example, may be 1% by mass or greater, 2% by mass or greater, or 3% by mass or greater, and may be 50% by mass or less, 45% by mass or less, 40% by mass or less, 35% by mass or less, 30% by mass or less, 25% by mass or less, 20% by mass or less, 15% by mass or less, 10% by mass or less, 7% by mass or less, or 5% by mass or less, relative to the mass of the aqueous phase.

(Organic solvent)

As the organic solvent, for example, an aromatic, an alcohol, a polyhydric alcohol, a glycol ether, a hydrocarbon, or an ester can be used. These solvents may be used independently, or may be used in combination.

As the aromatic, for example, benzyl alcohol, ethylene glycol monophenyl ether, ethylene glycol monobenzyl ether, propylene glycol monophenyl ether, diethylene glycol monophenyl ether, alkylsulfonic phenyl ester, butyl phthalate, ethylhexyl phthalate, tridecyl phthalate, ethylhexyl trimellitate, diethylene glycol dibenzoate, or dipropylene glycol dibenzoate can be used.

As the alcohol, for example, ethanol, n-propanol, isopropanol, n-butanol, isobutanol, tert-butyl alcohol, 1-pentanol, isoamyl alcohol, sec-amyl alcohol, 3-pentanol, tert-amyl alcohol, n-hexanol, methyl amyl alcohol, 2-ethyl butanol, n-heptanol, 2-heptanol, 3-heptanol, n-octanol, nonanol, n-decanol, undecanol, tetradecanol, heptadecanol, cyclohexanol, or 2-methylcyclohexanol can be used.

As the polyhydric alcohol, for example, ethylene glycol, diethylene glycol, 3-methyl-1,3-butanediol, triethylene glycol, dipropylene glycol, 1,3-propanediol, 1,3-butanediol, 1,5-pentanediol, hexylene glycol, or octylene glycol can be used.

As the glycol ether, for example, methyl isopropyl ether, ethyl ether, ethyl propyl ether, ethyl butyl ether, isopropyl ether, butyl ether, hexyl ether, 2-ethylhexyl ether, ethylene glycol monohexyl ether, ethylene glycol mono-2-ethylbutyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monobutyl ether, tetraethylene glycol monobutyl ether, 3-methoxy-3-methyl-1-butanol, 3-methoxy-1-butanol, propylene glycol monomethyl ether, propylene glycol monoethyl ether, propylene glycol monopropyl ether, propylene glycol monobutyl ether, propylene glycol tertiary butyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monobutyl ether, or tetrapropylene glycol monobutyl ether can be used.

As the hydrocarbon, for example, a linear chain hydrocarbon such as hexane, isohexane, heptane, octane, nonane, or decane; or a cyclic hydrocarbon such as cyclohexane, methylcyclohexane, or ethylcyclohexane can be used.

As the ester, for example, propylene glycol methyl ether acetate, propylene glycol diacetate, 3-methyl-3-methoxybutyl acetate, propylene glycol ethyl ether acetate, ethylene glycol ethyl ether acetate, butyl formate, isobutyl formate, isoamyl formate, propyl acetate, butyl acetate, isopropyl acetate, isobutyl acetate, isoamyl acetate, methyl propionate, ethyl propionate, propyl propionate, isobutyl propionate, isoamyl propionate, methyl butyrate, ethyl butyrate, propyl butyrate, methyl isobutyrate, ethyl isobutyrate, propyl isobutyrate, methyl valerate, ethyl valerate, propyl valerate, methyl isovalerate, ethyl isovalerate, propyl isovalerate, methyl trimethylacetate, ethyl trimethylacetate, propyl trimethylacetate, methyl caproate, ethyl caproate, propyl caproate, methyl caprylate, ethyl caprylate, propyl caprylate, methyl laurate, ethyl laurate, methyl oleate, ethyl oleate, caprylic triglyceride, tributyl acetate citrate, octyl oxystearate, propylene glycol monoricinoleate, methyl 2-hydroxyisobutyrate, or 3-methoxybutyl acetate can be used.

The content ratio of the organic solvent can be adjusted according to the desired viscosity of the oil phase and, for example, may be 1% by mass or greater, 2% by mass or greater, or 3% by mass or greater, and may be 50% by mass or less, 45% by mass or less, 40% by mass or less, 35% by mass or less, 30% by mass or less, 25% by mass or less, 20% by mass or less, 15% by mass or less, 10% by mass or less, 7% by mass or less, or 5% by mass or less, relative to the mass of the oil phase.

<Coloring material>

As the coloring material, various coloring materials that can be used in conventional inks, such as a dye, a pigment, or a mixture of a dye and a pigment, can be used. These coloring materials may be used independently, or may be mixed and used.

As the dye, a water-soluble dye can be used. As the water-soluble dye, all dyes that dissolve or disperse in water can be used, and examples include acidic dyes such as eosin, phloxine, Water Yellow #6-C, Acid Red, Water Blue #105, Brilliant Blue FCF, and Nigrosine NB; direct dyes such as Direct Black 154, Direct Sky Blue 5B, and Violet BB; and basic dyes such as rhodamine and methyl violet.

A water-insoluble dye is a dye that is insoluble in water at room temperature. As such a water-insoluble dye, for example, a salt-forming dye, a dispersed dye, or an oil-soluble dye can be used. Among these, from the viewpoint of color development, a salt-forming dye is preferably used.

Examples of the salt-forming dye include dyes having azo-based, metal complex azo-based, anthraquinone-based, and metal phthalocyanine-based chemical structures. For example, Valifast® Black 1807, Valifast® Blue 2620, Valifast® Brown 2402, Valifast® Green 1501, Valifast® Orange 2210, Valifast® Pink 2310, Valifast® Red 1355, Valifast® VIOLET 1701, and Valifast® Yellow 1101 by Orient Chemical Industries Co., Ltd. can be used.

As the dispersed dye, for example, at least one dye selected from C.I. Disperse Yellow 198, C.I. Disperse Yellow 42, C.I. Disperse Red 92, C.I. Disperse Violet 26, C.I. Disperse Violet 35, C.I. Disperse Blue 60, and C.I. Disperse Blue 87 can be used.

As the oil-soluble dye, for example, Oil Black 860, Oil Blue 613, Oil Brown BB, Oil Green 530, Oil Orange 201, Oil Pink 312, Oil Red 5B, Oil Scarlet 318, or Oil Yellow 105 by Orient Chemical Industries Co., Ltd. can be used.

As the pigment, a conventionally known inorganic or organic pigment such as titanium oxide, a resin particle pigment containing a pigment or dye, a pseudo-pigment in which a resin emulsion is colored with a dye or pigment, a white plastic pigment, a glitter pigment, a pigment in which silica or mica serves as a substrate and iron oxide or titanium oxide is multilayer-coated on the surface, a thermochromic pigment, or a photochromic particle can be used without limitation.

As the inorganic pigment, for example, carbon black, titanium black, zinc oxide, red iron oxide, aluminum, chromium oxide, iron black, cobalt blue, iron oxide yellow, viridian, zinc sulfide, lithopone, cadmium yellow, vermillion, cadmium red, chrome yellow, molybdate orange, zinc chromate, strontium chromate, white carbon, clay, talc, ultramarine, precipitated barium sulfate, baryte powder, calcium carbonate, white lead, bluish white, iron blue, manganese violet, aluminum powder, or brass powder can be used.

Organic pigments include azo-lakes, insoluble azo pigments, chelate azo pigments, phthalocyanine pigments, perylene and perinone pigments, and nitroso pigments. Examples of such organic pigments include C.I. Pigment Blue 17, C.I. Pigment Blue 15, C.I. Pigment Blue 27, C.I. Pigment Red 5, C.I. Pigment Red 22, C.I. Pigment Red 38, C.I. Pigment Red 48, C.I. Pigment Red 49, C.I. Pigment Red 53, C.I. Pigment Red 57, C.I. Pigment Red 81, C.I. Pigment Red 104, C.I. Pigment Red 146, C.I. Pigment Red 245, C.I. Pigment Yellow 1, C.I. Pigment Yellow 3, C.I. Pigment Yellow 12, C.I. Pigment Yellow 13, C.I. Pigment Yellow 14, C.I. Pigment Yellow 17, C.I. Pigment Yellow 34, C.I. Pigment Yellow 55, C.I. Pigment Yellow 74, C.I. Pigment Yellow 95, C.I. Pigment Yellow 166, C.I. Pigment Yellow 167, C.I. Pigment Orange 5, C.I. Pigment Orange 13, C.I. Pigment Orange 16, C.I. Pigment Violet 1, C.I. Pigment Violet 3, C.I. Pigment Violet 19, C.I. Pigment Violet 23, C.I. Pigment Violet 50, and C.I. Pigment Green 7.

Thermochromic pigments can include thermochromic pigments manufactured by microencapsulating a thermochromic composition comprising at least a leuco dye that functions as a color former, a developer as a component capable of causing the leuco dye to form color, and a color change temperature regulator that can control the color change temperature in the coloration by the leuco dye and the developer, so as to have a predetermined average particle size (for example, 0.1 to 6 $\mu$m). The average particle size, for example, may be 0.1 $\mu$m or more, 0.2 $\mu$m or more, 0.3 $\mu$m or more, 0.5 $\mu$m or more, 0.7 $\mu$m or more, or 0.9 $\mu$m or more, and may be 6 $\mu$m or less, 5 $\mu$m or less, 4 $\mu$m or less, 3 $\mu$m or less, 2 $\mu$m or less, or 1 $\mu$m or less.

As the photochromic particle, for example, a photochromic particle composed of at least one selected from photochromic substances, such as photochromic dyes (compounds) and fluorescent dyes, and a resin, such as a terpene-phenol resin, can be used. In addition, the photochromic particle can include photochromic particles manufactured by microencapsulating a photochromic composition comprising at least one selected from photochromic substances such as photochromic dyes (compounds) and fluorescent dyes, an organic solvent, and an additive such as an antioxidant, a photostabilizer, or a sensitizer, so as to have a predetermined average particle size (for example, 0.1 to 6 $\mu$m).

The photochromic particle, by suitably using the above photochromic substance, for example, can have the properties of being colorless in an indoor lighting environment (indoor lighting selected from incandescent lamp, fluorescent lamp, lamp, and white LED) and forming color in an ultraviolet-irradiated environment (environment irradiated with radiation at wavelengths of 200 to 400 nm or sunlight including ultraviolet rays).

In the present invention (including the Examples), "average particle size" is appropriately selected depending on size of the particles to be measured, is the value of a histogram average particle size (D50) calculated on a volume basis in a scattering intensity distribution measured by a dynamic light scattering method in the case of particles of generally less than 1 $\mu$m, and is the value of median diameter (D50) calculated on a volume basis in a laser diffraction method in the case of particles of 1 $\mu$m or more. The measurement of average particle size can be carried out using a particle size analyzer (Microtrac HRA 9320-X100 (Nikkiso Co., Ltd.)).

Methods of microencapsulating the above thermochromic pigment and the above photochromic particle can include, for example, an interfacial polymerization method, an interfacial polycondensation method, an *in situ* polymerization method, a liquid-curing coating method, a method of phase separation from an aqueous solution, a method of phase separation from an organic solvent, a melting dispersion cooling method, an air-suspension coating method, and a spray drying method, and can be appropriately selected according to application.

For example, in a method of phase separation from an aqueous solution, a thermochromic microcapsule pigment can be manufactured by a method comprising carrying out the following steps, particularly the following steps in this order:

(1) heat-melting the leuco dye, the developer, and the color change temperature regulator;
(2) adding the heat-melted leuco dye, developer, and color change temperature regulator to an emulsifier solution, and heating and stirring to disperse the mixture in the form of oil droplets to prepare a dispersion liquid;
(3) adding gradually, as a capsule membrane agent, a resin raw material capable of forming a wall membrane, such as a urethane resin, an epoxy resin, or an amino resin, for example, an amino resin solution, specifically, an amino resin solution such as a methylolmelamine aqueous solution, a urea solution, or a benzoguanamine solution, to the above dispersion liquid and reacting the resin raw material to form a capsule membrane, thereby obtaining a thermochromic microcapsule pigment; and
(4) filtering the dispersion liquid comprising the thermochromic microcapsule pigment.

In the thermochromic pigment, by suitably combining the types and amounts of the leuco dye, the developer, and the color change temperature regulator, the color-forming temperature and color-erasing temperature of each color can be set to suitable temperatures.

These coloring materials can be used independently or used in a mixture of two or more. Among these coloring materials, the average particle sizes of pigments dispersed in water, resin particle pigments, pseudo-pigments, white plastic pigments, multilayer-coated pigments, thermochromic pigments, and photochromic pigments vary according to ball diameter and ink composition and viscosity. However, it is desirable that the average particle size be 0.02 to 6 $\mu$m. The average particle size, for example, may be 0.02 $\mu$m or more, 0.05 $\mu$m or more, 0.07 $\mu$m or more, 0.10 $\mu$m or more, 0.20 $\mu$m or more, 0.30 $\mu$m or more, 0.50 $\mu$m or more, 0.70 $\mu$m or more, or 0.90 $\mu$m or more, and may be 6 $\mu$m or less, 5 $\mu$m or less, 4 $\mu$m or less, 3 $\mu$m or less, 2 $\mu$m or less, or 1 $\mu$m or less.

The content of these coloring materials can be appropriately increased or decreased depending on drawn line density of ink, but may be 0.1% by mass or greater, 0.3% by mass or greater, 0.5% by mass or greater, 0.7% by mass or greater, 0.9% by mass or greater, or 1.0% by mass or greater, and is preferably 40% by mass or less, 35% by mass or less, 30% by mass or less, 25% by mass or less, 20% by mass or less, 15% by mass or less, or 10% by mass or less, relative to the total amount of the oil-in-water type ink composition.

<Additional component>

Examples of an additional component include a dispersant, a leveling agent, a rust inhibitor, a preservative, a lubricant, a pH adjuster, and a surface modifier. As the leveling agent, for example, a fluorine-based surfactant or a silicone oil can be used. As the lubricant, for example, a phosphate ester can be used. As the pH adjuster, for example, an amine such as triethanolamine can be used. As the surface modifier, a silicone-based surface modifier can be used.

<<Writing instrument>>

The writing instrument contains the above oil-in-water type ink composition for writing instruments. The writing instrument may comprise an ink reservoir, a writing portion, and a retaining portion. In this case, the oil-in-water type ink may be stored in the ink reservoir. The writing instrument may be a ballpoint pen.

<Ink reservoir>

In the ink reservoir, the above oil-in-water type ink composition for writing instruments is stored.
For the ink reservoir, any member can be used as long as the member is capable of storing ink and supplying ink to the writing portion. The reservoir may be of a direct-liquid type comprising a collector structure (ink-retaining mechanism), or may be a wick-type ink reservoir.
The ink reservoir and the writing portion may be integrated. Particularly, if the writing instrument is a ballpoint pen, the ink reservoir may be a refill for writing instruments.
When the ink reservoir is a refill for ballpoint pens, the thickness of the outer wall of the ink reservoir, i.e., value of (outer diameter - inner diameter) of ink reservoir / 2, is preferably 0.3 mm or more, 0.5 mm or more, or 0.7 mm or more and 2.0 mm or less, 1.8 mm or less, 1.5 mm or less, or 1.2 mm or less, from the viewpoint of suppressing generation of bubbles and obtaining a stable writing flow rate.

<Writing portion>

The writing portion can consist of a writing portion comprising a ballpoint pen tip in the nib portion.
The ballpoint pen tip may be composed of a ball and a holder rotatably holding the ball. The ball may be composed of any material used in balls of ballpoint pens, and for example, may be composed of stainless steel, cemented carbide, or a ceramic. The shape of the ballpoint pen tip is not particularly limited, and for example, may be bullet-shaped or needle-shaped.
The width of an ink flow path of the ballpoint pen in a direction perpendicular to the axial direction may be 5 $\mu$m or more, 7 $\mu$m or more, 10 $\mu$m or more, 12 $\mu$m or more, or 15 $\mu$m or more, and may be 30 $\mu$m or less, 28 $\mu$m or less, 25 $\mu$m or less, 22 $\mu$m or less, or 20 $\mu$m or less. By setting the width of the flow path within the above range, a smooth writing feel can be obtained. The width of the flow path is represented by the following formula:

$$(A - B)/2$$

wherein A and B represent the diameters of ball housing 14 and ball 12 of the ballpoint pen, respectively, in a direction passing through the center of the ball 12 of the ballpoint pen tip 10 and perpendicular to the axial direction.
In the ball of the ballpoint pen tip, for the purpose of enhancing stability of writing flow rate and writing feel, the surface roughness Ra of the ball is more preferably less than 15 nm, less than 12 nm, or less than 10 nm.
The "surface roughness Ra" in the present invention (including the Examples described below) is measured by a non-contact surface profiler (NewView 7200, Zygo Corporation), set under conditions of lens magnification of 50×, evaluation length of 100 $\mu$m, and Gaussian filter of 25 $\mu$m, and in accordance with JIS B0601 (Geometrical Product Specification-Surface Texture).

<Retaining portion>

The retaining portion may be a portion that allows the writing instrument of the present invention to be held by hand, and may have a hollow structure that can accommodate the ink reservoir. The retaining portion may have a shape such as a cylindrical shape or a polygonal tubular shape.

EXAMPLES

The present invention will be specifically described by the Examples and Comparative Examples. However, the present invention is not limited thereto.

<<Preparation of oil-in-water type ink composition for writing instruments>>

<Example 1>

7.5 parts by mass of a condensed fatty acid ester (Minerasol LB-601, Itoh Oil Chemicals Co., Ltd., ester A) and 2.5 parts by mass of a mixture of a sulfide and a sulfurized oil/fat (DAILUBE GS-330, DIC Corporation) were mixed, and then heated to a temperature of 50°C to 60°C under stirring to obtain an oil-based solution in which these components were completely dissolved.

Separately, polyoxyethylene styrenated phenyl ether (Newcol N780, Nippon Nyukazai Co., Ltd.) as an emulsifier component was dissolved under stirring in purified water to prepare an emulsifier solution. The emulsifier solution was then gradually added to the oil-based solution to induce a phase inversion from water-in-oil type (W/O) to oil-in-water type (O/W) to obtain an oil-in-water type emulsion.

A pigment dispersion was then added to the oil-in-water type emulsion under stirring to obtain 100 parts by mass of an ink composition for writing instruments of Example 1. The pigment dispersion consisted of 6.7 parts by mass of carbon black as a coloring agent (pigment), 1.3 parts by mass of a styrene acrylic resin as a dispersant, 2 parts by mass of ethylene glycol as an organic solvent, 0.6 parts by mass of a phosphate ester as a lubricant, 0.6 parts by mass of triethanolamine as a pH adjuster, and 38.8 parts by mass of water. Details of the emulsifier solution, pigment dispersion components, and additive components used are shown in Table 1.

<Examples 2 to 6 and Comparative Examples 1 to 4>

Except that the substances used and content ratios were changed as shown in Table 1, the oil-in-water type ink compositions for writing instruments of Examples 2 to 5 and Comparative Examples 1 to 4 were prepared in the same manner as in Example 1.

Details of other substances shown in Table 1 are as follows:

Ester A: Minerasol LB-601, Itoh Oil Chemicals Co., Ltd.
Ester B: Minerasol LB-702, Itoh Oil Chemicals Co., Ltd.
Sulfide A: sulfurized olefin (DAILUBE GS-450, DIC Corporation)
Sulfide B: sulfurized olefin (DAILUBE IS-30, DIC Corporation)
Amine salt: dialkylamine molybdate salt
Zinc salt: zinc dialkyldithiophosphate
Oleic acid: oleic acid

<<Evaluation>>

Each of the prepared oil-in-water type ink compositions for writing instruments was filled into a ballpoint pen to produce a water-based ballpoint pen. Specifically, the barrel of a ballpoint pen (Signo UM-100, Mitsubishi Pencil Co., Ltd.) was used, and the above ink composition was loaded into a refill consisting of a polypropylene ink container tube having an outer diameter of 6.0 mm, an inner diameter of 3.8 mm, and a length of 113 mm; a stainless-steel tip (cemented carbide ball, a ball diameter of 0.38 mm and a surface roughness of less than 10 nm); and a joint connecting the container tube and the tip. An ink follower was loaded at the rear end of the ink.

The width of the ink flow path of the ballpoint pen in a direction perpendicular to the axial direction was 18 $\mu$m.

Using these, the following evaluation tests were carried out.

<Writability in high-temperature environment>

A produced ballpoint pen was stored in a horizontal position within an open chamber set at a temperature of 50°C for 1 day. This ballpoint pen was used as-is to write within the open chamber set at a temperature of 50°C, and the writing feel was evaluated. Evaluation criteria were as follows.

A: Blurring did not occur at all.
B: Although blurring occurred, drawn lines could be sufficiently recognized.

C: Blurring occurred to the extent that recognition of drawn lines was severely affected.

<Low-temperature stability>

A produced ballpoint pen was stored in a horizontal position within an open chamber set at a temperature of -5°C for 1 day. After storage, the ballpoint pen was returned to room temperature. This ballpoint pen was used to write, and the writing feel was evaluated. Evaluation criteria were as follows.

A: Blurring did not occur at all.
B: Although blurring occurred, drawn lines could be sufficiently recognized.
C: Blurring occurred to the extent that recognition of drawn lines was severely affected.

<Writing flow rate stability>

A fabricated ballpoint pen was used to carry out a continuous 100 m "spiral writing" having a diameter of 30 mm on writing paper in accordance with ISO standards using a writing tester, and the resulting drawn line was confirmed. This test was carried out under conditions of a writing load of 100 gf, a writing angle of 60°, and a writing speed of 4.5 mm/min. Evaluation criteria were as follows.

A: Drawn line density was uniform throughout.
B: The portion where drawn line density was low amounted to less than 1 full spiral.
C: The portion where drawn line density was low amounted to 1 full spiral or more.

The configurations and evaluation results of the Examples and Comparative Examples are shown in Table 1.

[Table 1]

Table 1

| | | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|
| Oil phase | Condensed fatty acid ester, etc. | Type | Ester A | Ester B | Ester A | Ester B | Ester A | Ester A | | | Ester B |
| | | Parts by mass | 7.5 | 7.5 | 4.5 | 7.5 | 9.5 | 10 | | | 7.5 |
| | Sulfide or sulfurized oil/-fat | Type | Mixed | Sulfide A | Sulfide B | Sulfide B | Sulfide A | | | | |
| | | Parts by mass | 2.5 | 1.5 | 2 | 4.5 | 0.05 | | | | |
| | Other | Type | | | | | | | Amine salt | Zinc salt | Oleic acid |
| | | Parts by mass | | | | | | | 10 | 10 | 1.5 |
| Aqueous phase | Emulsifier solution | Emulsifier Parts by mass | 5 | 5 | 5 | 5 | 5 | 5 | 5 | 5 | 5 |
| | | Water Parts by mass | 35 | 35 | 35 | 35 | 35 | 35 | 35 | 35 | 35 |
| | Pigment dispersion | Coloring material Parts by mass | 6.7 | 6.7 | 6.7 | 6.7 | 6.7 | 6.7 | 6.7 | 6.7 | 6.7 |
| | | Resin Parts by mass | 1.3 | 1.3 | 1.3 | 1.3 | 1.3 | 1.3 | 1.3 | 1.3 | 1.3 |
| | | Organic solvent Parts by mass | 2 | 2 | 2 | 2 | 2 | 2 | 2 | 2 | 2 |
| | | Phosphate ester Parts by mass | 0.6 | 0.6 | 0.6 | 0.6 | 0.6 | 0.6 | 0.6 | 0.6 | 0.6 |
| | | pH adjuster Parts by mass | 0.6 | 0.6 | 0.6 | 0.6 | 0.6 | 0.6 | 0.6 | 0.6 | 0.6 |
| | | Water Parts by mass | 38.8 | 39.8 | 42.3 | 36.8 | 39.25 | 38.8 | 38.8 | 38.8 | 39.8 |
| Total parts by mass of oil phase component in ink | | | 10.0 | 9.0 | 6.5 | 12.0 | 9.6 | 10.0 | 10.0 | 10.0 | 9.0 |
| Content ratio (% by mass) of sulfide or sulfurized oil/fat in oil phase | | | 25.0 | 16.7 | 30.8 | 37.5 | 0.5 | 0.0 | 0.0 | 0.0 | 0.0 |

(continued)

| | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|
| Content ratio (% by mass) of sulfide or sulfurized oil/fat in ink | | 2.50 | 1.50 | 2.00 | 4.50 | 0.05 | 0.00 | 0.00 | 0.00 | 0.00 |
| Evaluation results | Writability in high-temperature environment | A | A | A | A | B | C | C | C | C |
| | Low-temperature stability | A | A | A | A | B | C | C | C | C |
| | Writing flow rate stability | A | A | A | A | B | C | C | C | A |

From Table 1, it can be understood that the oil-in-water type ink compositions for writing instruments of Examples 1 to 5, wherein the oil phase contains a sulfide or a sulfurized oil/fat, were satisfactory in terms of smoothness in a high-temperature environment, low-temperature stability of ink, and writing flow rate stability.

REFERENCE SIGNS LIST

10    ballpoint pen tip
12    ball
14    ball housing
A    diameter of ball housing in direction perpendicular to axial direction
B    diameter of ball in direction perpendicular to axial direction

**Claims**

1.   An oil-in-water type ink composition for writing instruments, comprising an aqueous phase and an oil phase dispersed in the aqueous phase, in an oil-in-water type emulsion state,

      wherein at least one of the oil phase and the aqueous phase comprises a coloring material, and
      wherein the oil phase contains a sulfide or a sulfurized oil/fat.

2.   The oil-in-water type ink composition for writing instruments according to Claim 1, wherein the sulfide has a general formula below:

$$R^1\text{-}S_x\text{-}R^2$$

    wherein $R^1$ and $R^2$ each represent an alkyl group or alkenyl group having 2 to 24 carbon atoms; and x represents an integer of 1 to 8.

3.   The oil-in-water type ink composition for writing instruments according to Claim 1 or 2, wherein content ratio of the sulfide or sulfurized oil/fat in the oil phase, relative to mass of the oil phase, is 40% by mass or less.

4.   The oil-in-water type ink composition for writing instruments according to Claim 1 or 2, wherein content ratio of the sulfide or sulfurized oil/fat, relative to the oil-in-water type ink composition for writing instruments, is 5% by mass or less.

5.   The oil-in-water type ink composition for writing instruments according to Claim 1 or 2, wherein content ratio of the oil phase, relative to the oil-in-water type ink composition for writing instruments, is 1% by mass or greater and 30% by mass or less.

6.   A writing instrument, comprising an ink reservoir having the oil-in-water type ink composition for writing instruments according to Claim 1 or 2.

7.   The writing instrument according to Claim 6, which is a ballpoint pen.

8.   The writing instrument according to Claim 7, wherein width of an ink flow path of the ballpoint pen in a direction perpendicular to an axial direction, represented by a formula below:

$$(A - B)/2$$

    wherein A and B represent diameters of a ball housing and a ball of the ballpoint pen, respectively, in a direction passing through center of the ball of the ballpoint pen and perpendicular to the axial direction, is 5 $\mu$m or more and 30 $\mu$m or less.

# Fig. 1

## INTERNATIONAL SEARCH REPORT

| International application No. |
| --- |
| **PCT/JP2024/008790** |

| A. | CLASSIFICATION OF SUBJECT MATTER |
| --- | --- |

*C09D 11/16*(2014.01)i; *C09D 11/18*(2006.01)i
FI:   C09D11/16; C09D11/18

According to International Patent Classification (IPC) or to both national classification and IPC

| B. | FIELDS SEARCHED |
| --- | --- |

Minimum documentation searched (classification system followed by classification symbols)

C09D11/16: C09D11/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2013-221051 A (MITSUBISHI PENCIL CO., LTD.) 28 October 2013 (2013-10-28) claim 1, paragraphs [0067], [0081] | 1-2, 5-7 |
| A | same as above | 3-4, 8 |
| Y | JP 2014-88486 A (PENTEL CORP.) 15 May 2014 (2014-05-15) claims, paragraph [0008] | 1-2, 5-7 |
| Y | JP 2017-201000 A (PENTEL CORP.) 09 November 2017 (2017-11-09) claims, paragraph [0009] | 1-2, 5-7 |
| Y | JP 2013-136742 A (PENTEL CORP.) 11 July 2013 (2013-07-11) paragraph [0021] | 1-2, 5-7 |

☐ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 May 2024** | **21 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/008790**

| Patent document cited in search report | | | Publication date (day/month/year) | Patent family member(s) | Publication date (day/month/year) |
|---|---|---|---|---|---|
| JP | 2013-221051 | A | 28 October 2013 | US 8900358 B2 claims, column 11, lines 14-26, column 16, lines 30-41 | |
| JP | 2014-88486 | A | 15 May 2014 | (Family: none) | |
| JP | 2017-201000 | A | 09 November 2017 | (Family: none) | |
| JP | 2013-136742 | A | 11 July 2013 | (Family: none) | |

Form PCT/ISA/210 (patent family annex) (July 2022)

**REFERENCES CITED IN THE DESCRIPTION**

**Patent documents cited in the description**

- JP 2013221051 A
- JP 2013203790 A